# EUROPEAN PATENT APPLICATION

(11) **EP 1 859 967 A1**
(43) Date of publication of application: **28.11.2007**
(21) Application number: 06715537.4
(22) Date of filing: 10.03.2006
(51) Int. Cl.: B60C 19/12, B29D 30/06, B29C 73/20

(54) **PNEUMATIC TIRE AND PROCESS FOR PRODUCING THE SAME**

(30) Priority: 11.03.2005 JP 2005069415
(71) Applicant: THE YOKOHAMA RUBBER CO., LTD., Tokyo 105-8685 (JP); HONDA MOTOR CO., LTD., Tokyo 107-8556 (JP)
(72) Inventor: SEKIGUCHI, Takumi, 2-1, Oiwake, Hiratsuka-shi, Kanagawa, 25 (JP); MIZONE, Tetsuya, Chuo 1-chome, Wako-shi, Saitama, 351019 (JP); KANEKURO, Masahito, Chuo 1-chome, Wako-shi, Saitama, 351019 (JP)
(74) Representative: HOFFMANN EITLE
(86) International application number: PCT/JP2006/304767
(87) International publication number: WO 2006/095862

(57) **Abstract**

Provided are a pneumatic tire T and a method of manufacturing the same. The pneumatic tire T includes: a tacky sealant layer 5 which is formed of a rubber component thermally decomposable with a peroxide, and which is disposed on the inner wall surface of the tire at least in a region corresponding to a tread portion 1; a cover rubber layer 6 which covers the tacky sealant layer 5. In the pneumatic tire T, the cover rubber layer 6 is provided with at least one gas vent hole 7a (7b) formed therein. This allows decomposition gas generated from the tacky sealant layer 5 to be discharged through the gas vent hole 7a (7b) to the outside of the tire.

## Description

### TECHNICAL FIELD

The present invention relates to a pneumatic tire and a method of manufacturing the same. Specifically, the present invention relates to a pneumatic tire with improved uniformity by disposing a tacky sealant layer that is formed of a rubber component thermally decomposable with a peroxide on the inner side of the tread portion, and relates also to a method of manufacturing such a pneumatic tire.

### BACKGROUND ART

When a tire runs over a nail or the like during the driving of the vehicle, a rapid reduction in the air pressure has to be avoided. For the purpose of securing safety driving of a vehicle in such a case, a number of pneumatic tires have been proposed, in which a tacky sealant layer is disposed on the inner side of a tread portion of the tire. When this tacky sealant layer is uncovered, troubles in handling, such as sticking, occur. For this reason, the surface of the tacky sealant layer is generally covered with a cover rubber layer for preventing the trouble.

Patent Document 1 proposes a technique using a characteristic of polyisobutylene rubber, which is thermally decomposable with a peroxide. In the proposed technique, to make the tacky sealant layer, a rubber composition containing polyisobutylene rubber and peroxide is disposed on the inner side of a tread portion of a green tire, and is modified into a sealant by using the heat at the time of curing. However, when a sealant layer is formed by using this technique, a large amount of decomposition gas is generated due to the decomposition reaction of the rubber component, and the resultant decomposition gas G is filled between a tacky sealant layer 5 and a cover rubber layer 6 as shown in Fig. 6. For this reason, when the tire runs with the decomposition gas G, the sealant of the tacky sealant layer 5 flows non-uniformly, resulting in a problem of deterioration in the uniformity of the tire.

Some methods are proposed as a countermeasure against this problem. In a method, a material with an excellent gas permeability is used for a cover rubber layer. Patent Document 2 discloses another method, in which twisted yarn for allowing decomposition gas to escape is provided between a tacky sealant layer and a cover rubber layer in a manner of penetrating from the inside to the outside.

However, in each of these methods, it takes a long time to completely discharge the decomposition gas. Accordingly, when the tire runs while the decomposition gas still remains, the tacky sealant layer is unevenly distributed due to the non-uniform flow of the sealant of the tacky sealant layer. As a result, the uniformity of the tire is deteriorated. For this reason, these proposals cannot be sufficient countermeasures.
Patent Document 1: Japanese Patent Application Kokai Publication No. Sho 53-55802
Patent Document 2: Japanese Patent Application Kokai Publication No. 2004-332811

### DISCLOSURE OF THE INVENTION

An object of the present invention is to provide a pneumatic tire that securely improves the deterioration in its uniformity, which deterioration derives from decomposition gas generated when a tacky sealant layer is formed by decomposition. Providing a method of manufacturing such tire is another object of the invention.

A pneumatic tire according to the present invention for achieving the above-described object is characterized by including: a tacky sealant layer which is formed of a rubber component thermally decomposable with a peroxide, and which is disposed on the inner wall surface of the tire at least in a region corresponding to a tread portion; a cover rubber layer which covers the tacky sealant layer; and at least one gas vent hole which is formed in the cover rubber layer.

In addition, a method of manufacturing a pneumatic tire according to the present invention is characterized by including the steps of: disposing a rubber component thermally decomposable with a peroxide on the inner wall surface of a tire at least in a region corresponding to a tread portion in a manner that the rubber component is covered with a cover rubber layer; forming a tacky sealant layer by decomposing the rubber component with the peroxide at the time of curing; and forming at least one gas vent hole in the cover rubber layer of the tire after the curing so as to discharge, from the gas vent hole, decomposition gas generated at the time of the curing.

According to the present invention, the gas vent hole is formed in the cover rubber layer, so that decomposition gas generated at the time of forming the tacky sealant layer by thermal decomposition is quickly discharged through the gas vent hole to the outside of the tire. This makes it possible to maintain the uniformity of the tire for a long time without allowing decomposition gas between the tacky sealant layer and the cover rubber layer to remain therebetween at the time of the running of the tire. In addition, since the non-uniform flow of the sealant of the tacky sealant layer is suppressed, the present invention provides an excellent sealing effect when the tire runs over a nail to be punctured.

### BRIEF DESCRIPTION OF THE DRAWINGS

Fig. 1 is a half sectional view showing an example of a pneumatic tire according to the present invention.
Fig. 2 is a plan view showing a chief part of the pneumatic tire of Fig. 1 as viewed from the inner side of the tire.
Fig. 3 is a plan view corresponding to Fig. 2, and showing another embodiment of the present invention.
Fig. 4 is a plan view corresponding to Fig. 2 and Fig. 3, and showing still another embodiment of the present invention.
A part (a) and a part (b) of Fig. 5 are graphs showing variations respectively in RFV and TFV, of a conventional tire and an example tire.
Fig. 6 is a cross-sectional view showing an example of a conventional pneumatic tire.

### BEST MODES FOR CARRYING OUT THE INVENTION

Descriptions will be given below in detail of a configuration of the present invention with reference to the accompanying drawings.

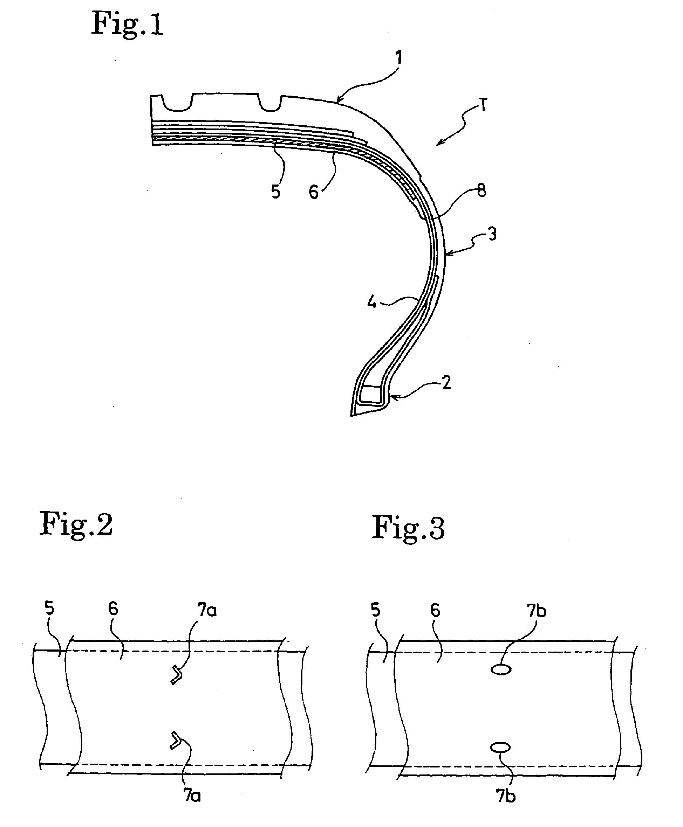

A pneumatic tire T shown in Figs. 1 and 2 is provided with: a tread portion 1; a pair of right and left bead portions 2; and a pair of right and left side wall portions 3, which connect the tread portion 1 to the corresponding bead portions 2. A carcass layer 8 extends from the tread portion 1 to the bead portions 2 respectively via the side wall portions 3, and is laid between the right and left beads paired with each other. Each of the end portions of the carcass layer 8 is locked around a corresponding bead in a manner that the end portion is folded back from the inner side of the tire to the outer side thereof around the bead. A tacky sealant layer 5 is disposed, on the inner peripheral side of an inner liner layer 4, and in a region corresponding to the tread portion 1, and is covered with a cover rubber layer 6. The tacky sealant layer 5 is formed in a way that a rubber component such as polyisobutylene rubber is thermally decomposed with a peroxide at the time of curing. The tacky sealant layer 5 has only to be disposed on the inner wall surface of the tire at least in a region corresponding to the tread portion, and may extend further to regions corresponding respectively to the side wall portions. In the embodiment of the disclosure, the tacky sealant layer 5 is disposed on the inner peripheral side of the inner liner layer 4, but may be disposed between the outer peripheral side of the inner liner layer 4 and the carcass layer 8. In the latter case, a part of the inner liner layer 4 also serves as the cover rubber layer 6.

As shown in Fig. 2, two gas vent holes 7a are formed respectively in the two end portions of the cover rubber layer 6 in the tire width direction. As to be described in descriptions of a manufacturing method, these gas vent holes 7a are provided by notching the cover rubber layer 6 after the tire is cured to be shaped. Decomposition gas, which is generated when the tacky sealant layer 5 is formed by thermal decomposition during the curing, is discharged through the gas vent holes 7a to the outside of the tire. The remaining decomposition gas, which has not been discharged by a discharging operation after the curing of the tire, may be discharged to a cavity portion in the tire through the running of the tire.

It is preferable to form each gas vent hole 7a into a slit shape as shown in Fig. 2 because the tacky sealant layer 5 will be exposed to the minimum. It is more preferable that the slit shape be bent into a hook shape as shown in Fig. 2. However, the shape of each gas vent hole 7a is not limited to the slit shape, may be an oval shape as shown in Fig. 3, and may alternatively be a circular or polygonal shape.

When the size of each gas vent hole is represented by the maximum diameter of the circumcircle surrounding the gas vent hole, it is preferable that the size be 5 mm to 15 mm. When the size is less than 5 mm, the efficiency in discharging the decomposition gas is reduced. When the size is more than 15 mm, the sticking trouble is more likely to occur due to the exposure of the tacky sealant layer.

In addition, a porous sheet of net, textile fabric or the like may be provided to the gas vent holes in the manner of covering the gas vent holes. This porous sheet makes it possible to avoid troubles caused when the tacky sealant layer is in touch.

The gas vent holes are preferably formed respectively in the two end portions of the cover rubber layer in the tire width direction. Suppose that the gas vent holes are positioned in the center region of the cover rubber layer in the tire width direction. In this case, since the cover rubber layer is pressed up to the inner liner layer side by the centrifugal force at the time of the running of the tire, decomposition gas may be inhibited from being discharged. The number of gas vent holes is at least one on each end portion in the tire width direction. However, the number be preferably enough to be one on each side.

Moreover, the position of each gas vent holes, in the tire circumferential direction, is preferably in a vicinity of a spliced portion where both edge portions of the cover rubber layer are bonded to each other in the tire circumferential direction. This spliced portion is formed thicker than the other portion because the edge portions of the cover rubber layer overlap each other. Accordingly, the spliced portion is easily brought into close contact with the inner liner layer side by the centrifugal force at the time of the running. For this reason, the tacky sealant layer positioned on the outer side of the spliced portion of the cover rubber layer is pressed to the inner liner layer side, so that decomposition gas remaining inside is more likely to gather in a vicinity of the spliced portion than the other portion. Consequently, the forming of the gas vent holes in a vicinity of the spliced portion makes it possible to efficiently discharge the gas.

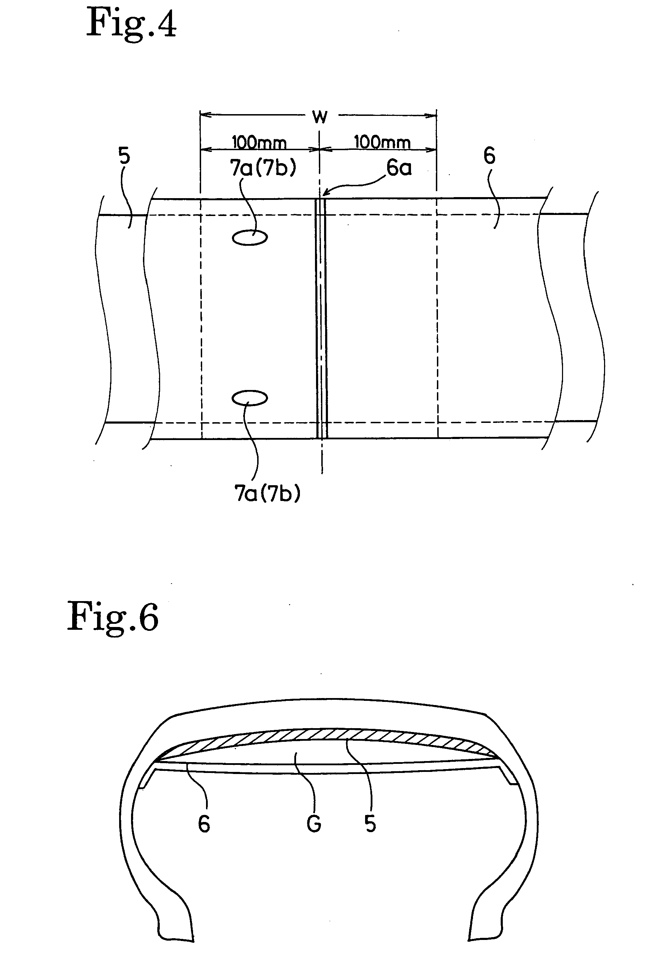

Specifically, as shown in Fig. 4, when a spliced portion 6a where the edge portions of the cover rubber layer 6 are bonded to each other in the tire circumferential direction is taken as the center, it is preferable that the gas vent holes 7a (7b) be formed within a region w extending from the center by 10 cm or less on each side of the center in the tire circumferential direction. In addition, it is preferable that one or more of the gas vent hole be formed in each side of the region w in the tire width direction. With this configuration, decomposition gas remaining inside the cover rubber layer 6 is efficiently discharged when the tire is rotating. As a result, a favorable uniformity of the tire is achieved.

In the present invention, as a rubber component to be decomposed with a peroxide, isobutylene rubber, isobutylene-isoprene rubber (IIR), isoprene rubber or the like are used. Incidentally, it is possible to combine another rubber component with the rubber composition composing the tacky sealant layer 5 in addition to the peroxide-decomposable rubber component, for the purpose of adjusting the viscosity. As this rubber component, for example, styrene-butadiene rubber, butadiene rubber or natural rubber can be given.

In addition, as the peroxide, acyl peroxides (for example, benzoyl peroxide, p-chlorobenzoyl peroxide), ketone peroxides (for example, methyl ethyl ketone peroxide), peroxyesters (for example, t-butyl peroxyacetate, t-butyl peroxybenzoate, t-butyl peroxyphthalate), alkyl peroxides (for example, dicumyl peroxide, di-t-butyl peroxybenzoate, 1,3-bis(t-butyl peroxyisopropyl)benzen), hydroperoxides (for example, t-butyl hydroperoxide) or the like are used.

In addition, a catalyst such as cobalt naphthenate may be added to the rubber composition composing the sealant layer as necessarily for the purpose of accelerating the decomposing of the rubber component with the peroxide. Moreover, in some cases, an inorganic filler such as carbon black and silica; a takiness agent such as polybutene; or a plasticizer such as aromatic process oil, naphthenic process oil and paraffinic process oil are added to the rubber composition.

The rubber composition composing the tacky sealant layer 5 in the present invention is formed by adding 0.2 to 20 parts by weight of the peroxide to 100 parts by weight of the rubber component which is decomposed with the peroxide. Such a rubber composition is in a solid state at the time of forming. Then, the rubber component in the rubber composition is decomposed to be a sealant material by the heating at the time of the curing, thus having a tackiness in a tire after the curing.

Hereinafter, descriptions will be given of a method of manufacturing a pneumatic tire according to the present invention.

In the method of manufacturing a pneumatic tire according to the present invention, a peroxide and a rubber component, which is decomposed with the peroxide, are firstly disposed on the inner wall surface of a green tire at least in a region corresponding to a tread portion in a manner that the peroxide and the rubber component are covered with a cover rubber layer at the time of forming the green tire. Then, when the green tire is set and cured in a mold, the rubber component is thermally decomposed with the peroxide so as to be modified into a tacky sealant layer. Subsequently, as shown in Fig. 2 or Fig. 3, at least one gas vent hole 7a or 7b is formed by notching the cover rubber layer of the tire after the curing. By forming this gas vent hole, decomposition gas generated at the time of curing is discharged to the outside of the tire. The gas may be caused to spontaneously flow out to be discharged, but it is preferable that the gas be purposefully discharged by pressing the cover rubber layer from the tire inner surface side, for example.

In addition, as a preferable operation of discharging decomposition gas, the inner surface side of the tire may be depressurized so that the decomposition gas is sucked and removed. This depressurization and suction makes it possible to discharge almost all of the decomposition gas. Moreover, it is preferable that the gas vent holes are sealed with a sealing member or the like after the gas is discharged. The sealing of the gas vent holes prevents the outside air from flowing back to the inside of the cover rubber layer. Accordingly, a non-uniform flow of the sealant of the tacky sealant layer is prevented so that the uniformity is much more favorably improved than otherwise.

### Example

An example pneumatic tire and a conventional tire, having the same tire size of 205/65R15, were prepared. The pneumatic tires as shown in Fig. 1 were formed and then cured by using a rubber composition composing a tacky sealant layer, which is compounded by adding 12 parts by weight of a peroxide (dicumyl peroxide) to 100 parts by weight of polyisobutylene rubber. In the example tire, two circular gas vent holes (a diameter of 10 mm) were formed in a cover rubber layer, and were sealed with a sealing member after gas was discharged forcedly by vacuuming. On the other hand, in the conventional tire, gas vent holes were not formed in the cover rubber layer.

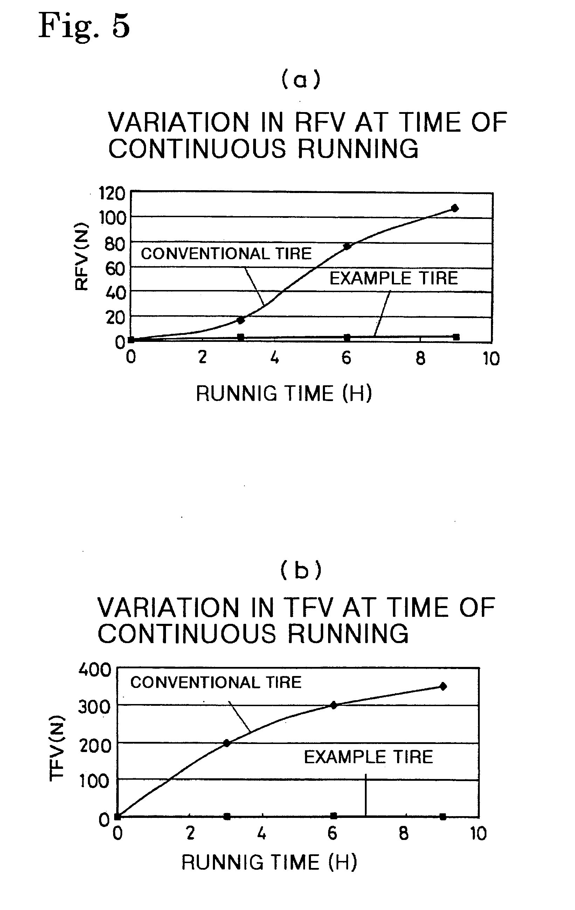

Each tire was caused to continuously run for 9 hours at a speed of 90km/h by using a instrument for measuring uniformity of the tire, so as to measure changes respectively in the value of RFV (Radial Force Variation) and the value of TFV (Tangential Force Variation) of the tire. The results of the measurements are shown in graphs respectively of Parts (a) and (b) of Fig. 5. As is clear from the results, the example tire of the present invention exhibits an excellent uniformity, in comparison to the conventional tire.

## Claims

1. A pneumatic tire comprising:
a tacky sealant layer which is formed of a rubber component thermally decomposable with a peroxide, and which is disposed on the inner wall surface of the tire at least in a region corresponding to a tread portion;
a cover rubber layer which covers the tacky sealant layer,
wherein the cover rubber layer is provided with at least one gas vent hole formed therein.

2. The pneumatic tire according to claim 1 wherein the maximum diameter of the circumcircle surrounding the gas vent hole is 5 mm to 15 mm.

3. The pneumatic tire according to any one of claims 1 and 2 wherein a porous sheet is provided to the gas vent hole in a manner of covering the gas vent hole.

4. The pneumatic tire according to any one of claims 1 to 3 wherein one or more of the gas vent hole is provided on each of the two ends of the cover rubber layer in the tire width direction.

5. The pneumatic tire according to any one of claims 1 to 4 wherein when a spliced portion formed by bonding the edge portions of the cover rubber layer in the tire circumferential direction is taken as the center, one or more of the gas vent hole is provided in a region extending from the center by 10 cm or less on each side of the center in the tire circumferential direction.

6. A method of manufacturing a pneumatic tire comprising the steps of:
disposing a rubber component thermally decomposable with a peroxide on the inner wall surface of a tire at least in a region corresponding to a tread portion in a manner that the rubber component is covered with a cover rubber layer;
forming a tacky sealant layer by decomposing the rubber component with the peroxide at the time of curing; and
forming at least one gas vent hole in the cover rubber layer of the tire after the curing so as to discharge, from the gas vent hole, decomposition gas generated at the time of the curing.

7. The method of manufacturing a pneumatic tire according to claim 6 wherein the decomposition gas is sucked and removed by depressurizing the inner surface side of the tire after the curing.

8. The method of manufacturing a pneumatic tire according to claim 7 wherein the gas vent hole is sealed with a sealing member after the decomposition gas is sucked and removed.
